# EUROPEAN PATENT APPLICATION

(11) **EP 4 745 524 A1**
(43) Date of publication of application: **20.05.2026**
(21) Application number: 24839294.6
(22) Date of filing: 10.05.2024
(51) Int. Cl.: G01C 21/26

(54) **METHOD EXECUTED BY TERMINAL DEVICE, METHOD EXECUTED BY SERVER, AND SYSTEM**

(30) Priority: 11.07.2023 JP 2023114023
(71) Applicant: TOYOTA JIDOSHA KABUSHIKI KAISHA, Toyota-Shi, Aichi-Ken 471-8571 (JP)
(72) Inventor: NAGATA, Yu, Toyota-shi, Aichi 471-8571 (JP); OTA, Takehira, Toyota-shi, Aichi 471-8571 (JP); TANIZAKI, Daisuke, Kariya-shi, Aichi 448-8650 (JP)
(74) Representative: Cabinet Beau de Loménie
(86) International application number: PCT/JP2024/017518
(87) International publication number: WO 2025/013396

(57) **Abstract**

A method executed by a terminal apparatus of a user includes determining, based on position information on a vehicle of the user, whether the vehicle has entered a target area, acquiring a remaining energy amount of the vehicle, and outputting a message regarding one or more energy supply facilities provided within the target area when the vehicle is determined to have entered the target area and the remaining energy amount is less than a predetermined criterion.

## Description

### CROSS-REFERENCE TO RELATED APPLICATION

This application claims priority to Japanese Patent Application No. 2023-114023, filed on July 11, 2023, the entire contents of which are incorporated herein by reference.

### TECHNICAL FIELD

The present disclosure relates to a method executed by a terminal apparatus, a method executed by a server, and a system.

### BACKGROUND

Conventionally, technology for guiding information on energy supply facilities is known. For example, Patent Literature (PTL) 1 discloses an in-vehicle apparatus that displays a map of a service area upon detecting that a vehicle has entered the service area.

### CITATION LIST

### Patent Literature

PTL 1: JP 2014-153339 A

### SUMMARY

### (Technical Problem)

There is room for improvement in technology for guiding information on energy supply facilities.

In light of such circumstances, the purpose of the present disclosure is to improve technology for guiding information on energy supply facilities.

### (Solution to Problem)

A method according to an embodiment of the present disclosure is a method executed by a terminal apparatus of a user, the method including:
determining, based on position information on a vehicle of the user, whether the vehicle has entered a target area;
acquiring a remaining energy amount of the vehicle; and
outputting a message regarding one or more energy supply facilities provided within the target area when the vehicle is determined to have entered the target area and the remaining energy amount is less than a predetermined criterion.

A method according to an embodiment of the present disclosure is a method executed by a server, the method including:
determining, based on position information on a vehicle of a user, whether the vehicle has entered a target area;
acquiring a remaining energy amount of the vehicle; and
transmitting, to a terminal apparatus of the user, a message regarding one or more energy supply facilities provided within the target area when the vehicle is determined to have entered the target area and the remaining energy amount is less than a predetermined criterion.

A system according to an embodiment of the present disclosure is a system including:
a terminal apparatus; and
a server configured to be communicable with the terminal apparatus,
wherein
the terminal apparatus or the server is configured to:
   determine, based on position information on a vehicle of a user, whether the vehicle has entered a target area; and
   acquire a remaining energy amount of the vehicle, and
the terminal apparatus is configured to output a message regarding one or more energy supply facilities provided within the target area when the vehicle is determined to have entered the target area and the remaining energy amount is less than a predetermined criterion.

### (Advantageous Effect)

According to an embodiment of the present disclosure, technology for guiding information on energy supply facilities is improved.

### BRIEF DESCRIPTION OF THE DRAWINGS

In the accompanying drawings:
FIG. 1 is a block diagram illustrating a schematic configuration of a system according to an embodiment of the present disclosure;
FIG. 2 is a block diagram illustrating a schematic configuration of a terminal apparatus;
FIG. 3 is a block diagram illustrating a schematic configuration of a server; and
FIG. 4 is a flowchart illustrating operations of the terminal apparatus.

### DETAILED DESCRIPTION

Hereinafter, an embodiment of the present disclosure will be described.

### (Outline of Embodiment)

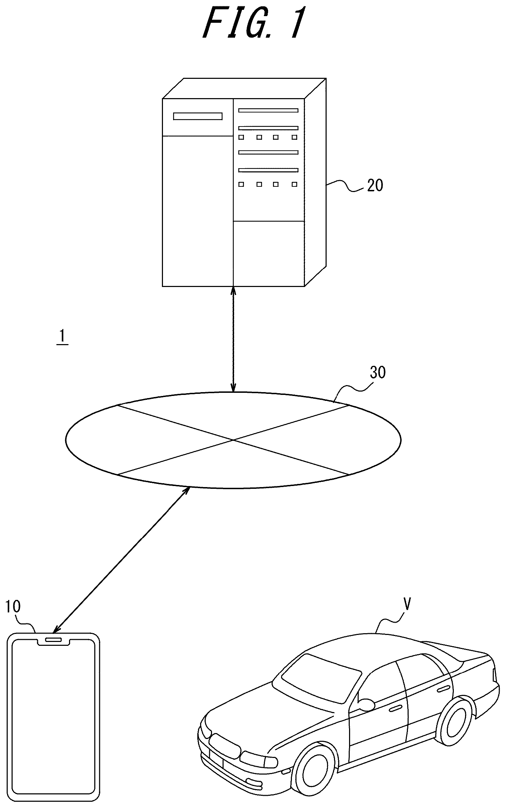

An outline of a system 1 according to the embodiment of the present disclosure will be described with reference to FIG. 1. The system 1 includes a terminal apparatus 10 and a server 20. The terminal apparatus 10 and the server 20 can communicate with each other via a network 30 including, for example, the Internet, a mobile communication network, and the like.

The terminal apparatus 10 is a computer such as, for example, a personal computer (PC), a mobile phone, a smartphone, or a tablet terminal, in which a dedicated application with a car navigation function is installed. Alternatively, the terminal apparatus 10 is a car navigation system (automotive navigation system) provided in a vehicle V of a user. The terminal apparatus 10 is used by the user. As described later, the terminal apparatus 10 displays, on a map screen, and outputs, in synthetic speech, target areas and the positions of energy supply facilities.

The server 20 belongs to a cloud computing system or other computing system, for example, and implements various functions. The server 20 can communicate with the terminal apparatus 10 via the network 30.

The network 30 includes the Internet, at least one WAN, at least one MAN, or a combination thereof. The term "WAN" is an abbreviation of wide area network. The term "MAN" is an abbreviation of metropolitan area network. The network 30 may include at least one wireless network, at least one optical network, or a combination thereof. The wireless network is, for example, an ad hoc network, a cellular network, a wireless LAN, a satellite communication network, or a terrestrial microwave network. The term "LAN" is an abbreviation of local area network.

The vehicle V is any automobile that uses energy such as gasoline, electricity, or hydrogen for at least part of drive.

In the present embodiment, the user is traveling on roads (hereinafter referred to as "roads and the like") such as highways using the vehicle V. The vehicle V can replenish energy using energy supply facilities provided within respective target areas along a driving route of the vehicle V.

In the present embodiment, the "energy supply facilities" refer to facilities that are provided on the premises of the target areas, which will be described later, and that can replenish energy to the vehicle V. The energy supply facilities include, for example, gas stations, EV charging stations, hydrogen stations, or the like, but are not limited to these.

In the present embodiment, the "target areas" refer to areas in which the vehicle V can enter from the roads and the like and can park for a certain period of time for the user's rest or to replenish energy to the vehicle V. The target areas are, for example, service areas (SAs) or parking areas (PAs), but are not limited to these. In the present embodiment, upon entering a target area, the vehicle V travels along a travel route that includes an entrance road (deceleration lane), a parking lot, and an exit road (acceleration lane) sequentially in one direction. The vehicle V can directly access energy supply facilities from the entrance road or the parking lot.

In the present embodiment, "the vehicle V enters a target area" means that the vehicle V deviates from the driving route of the roads and the like, and travels along the travel route of a target area.

Information regarding each target area is pre-stored in the server 20 and can be freely modified.

An outline of the present embodiment is described here, and details thereof will be described later. The terminal apparatus 10 determines, based on position information on the vehicle V of the user, whether the vehicle V has entered a target area. The terminal apparatus 10 acquires a remaining energy amount of the vehicle V. When the vehicle V is determined to have entered the target area and the remaining energy amount is less than a predetermined criterion, the terminal apparatus 10 outputs a message regarding one or more energy supply facilities provided within the target area.

According to the present embodiment, it is possible to convey information regarding energy supply facilities, e.g., the positions or the like of energy supply facilities in a target area, to users who have a high necessity for supplying energy to vehicles V. For users who do not have a high necessity for supplying energy to vehicles V, synthetic speech is not output, thereby reducing annoyance. Therefore, technology for guiding information on energy supply facilities is improved in that users entering target areas can easily grasp information on energy supply facilities.

Next, configurations of the system 1 will be described in detail.

### (Configuration of Terminal Apparatus)

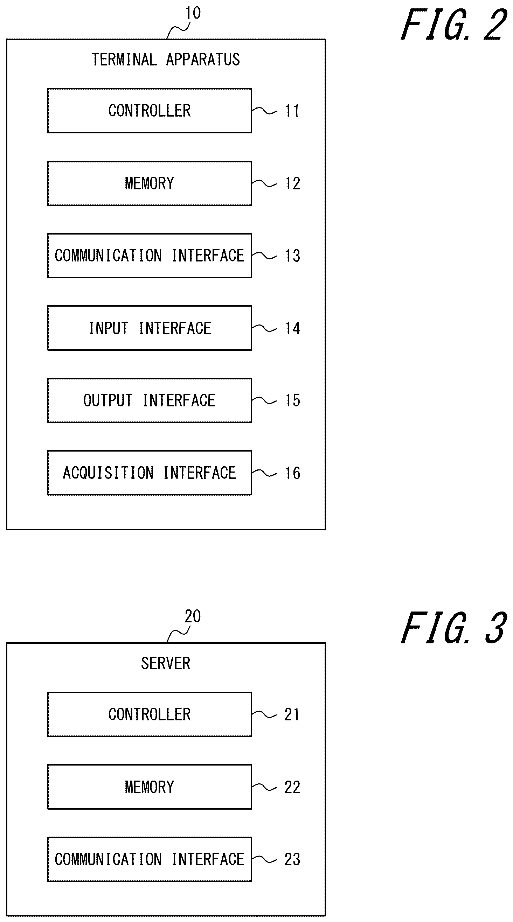

As illustrated in FIG. 2, the terminal apparatus 10 includes a controller 11, a memory 12, a communication interface 13, an input interface 14, an output interface 15, and an acquisition interface 16.

The controller 11 includes one or more processors, one or more programmable circuits, one or more dedicated circuits, or a combination of these. The processors are, for example, general purpose processors such as central processing units (CPUs) or graphics processing units (GPUs), or dedicated processors that are specialized for specific processing, but are not limited to these. The programmable circuits are, for example, field-programmable gate arrays (FPGAs), but are not limited to this. The dedicated circuits are, for example, application specific integrated circuits (ASICs), but are not limited to this. The controller 11 controls operations of the entire terminal apparatus 10.

The memory 12 includes one or more memories. The memories are, for example, semiconductor memories, magnetic memories, optical memories, or the like, but are not limited to these. The memories included in the memory 12 may each function as, for example, a main memory, an auxiliary memory, or a cache memory. The memory 12 stores any information used for operations of the terminal apparatus 10. For example, the memory 12 may store a system program, an application program, map information, and the like. The information stored in the memory 12 may be updated with, for example, information acquired from the network 30 via the communication interface 13.

The communication interface 13 includes one or more communication interfaces for connecting to the network 30. The communication interfaces are compliant with mobile communication standards such as the 4th generation (4G) standard and the 5th generation (5G) standard, a wired local area network (LAN) standard, or a wireless LAN standard, for example, but are not limited to these, and may be compliant with any communication standard. In the present embodiment, the terminal apparatus 10 communicates with the server 20 via the communication interface 13 and the network 30.

The input interface 14 includes one or more input devices for detecting input operations by the user. The input devices are, for example, a physical key, a capacitive key, a mouse, a touch panel, a touch screen integrally provided with a display of the output interface 15, a microphone, or the like, but is not limited to these. Alternatively, the input interface 14 may include interfaces for connecting to external input devices.

The output interface 15 includes one or more output devices for outputting information. The output devices are, for example, a display for outputting information as video, a speaker for outputting information as audio, or the like, but are not limited to these. Alternatively, the output interface 15 may include interfaces for connecting to external output devices.

The acquisition interface 16 has a global positioning system (GPS) receiver that receives GPS signals from GPS satellites. The controller 11 derives the position (for example, latitude and longitude) of the terminal apparatus 10 based on the GPS signals received by the acquisition interface 16.

The acquisition interface 16 includes any sensor module that can acquire the usage amount of energy used by the vehicle V. For example, when the vehicle V uses gasoline as energy, the acquisition interface 16 may include a sensor module that can measure the fuel injection amount of the vehicle V. For example, when the vehicle V uses electricity as energy, the acquisition interface 16 may include a power sensor module that can calculate the power consumption of the vehicle V. For example, when the vehicle V uses hydrogen as energy, the acquisition interface 16 may include a sensor module that can measure the amount of fuel consumed by the vehicle V.

### (Configuration of Server)

As illustrated in FIG. 3, the server 20 includes a controller 21, a memory 22, and a communication interface 23.

The controller 21 includes one or more processors, one or more programmable circuits, one or more dedicated circuits, or a combination of these. The controller 21 controls operations of the entire server 20.

The memory 22 includes one or more memories. The memories included in the memory 22 may each function as, for example, a main memory, an auxiliary memory, or a cache memory. The memory 22 stores any information to be used for operations of the server 20. For example, the memory 22 may store a system program, an application program, map information, embedded software, a database, and the like.

The communication interface 23 includes one or more communication interfaces for connecting to the network 30. The communication interfaces are compliant with, for example, a mobile communication standard, a wired LAN standard, or a wireless LAN standard, but are not limited to these, and may be compliant with any communication standard.

In the present embodiment, the communication interface 23 can acquire position information on the vehicle V by receiving the position information from the terminal apparatus 10.

The communication interface 23 can also acquire a remaining energy amount of the vehicle V by receiving the remaining energy amount from the terminal apparatus 10.

### (Operations of Terminal Apparatus)

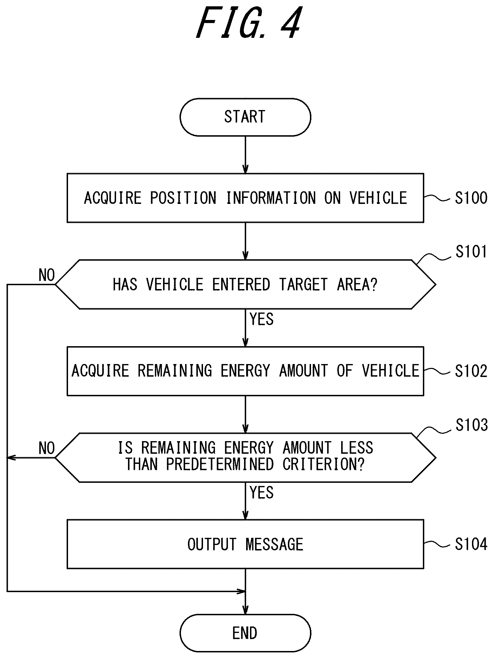

Operations of the terminal apparatus 10 according to the present embodiment will be described with reference to FIG. 4. The operations in FIG. 4 correspond to a method according to the present embodiment.

S100: The controller 11 of the terminal apparatus 10 acquires position information on the vehicle V.

Any method can be employed to acquire the position information. For example, the controller 11 acquires the position information on the vehicle V through the acquisition interface 16. The position information on the vehicle V may be specified by longitude and latitude.

The position information may be acquired at any timing.

S101: The controller 11 determines whether the vehicle V has entered a target area. When entrance is determined (S101-Yes), the process proceeds to S102. When no entrance is determined (S101-No), the process ends.

Any method can be employed to determine whether the vehicle V has entered a target area. For example, when the position information on the vehicle V traveling on a highway indicates a position on a deceleration lane leading to a target area rather than on a main line of the highway, the controller 11 may determine that the vehicle V has entered the target area. On the other hand, when the position information on the vehicle V indicates a position on the main line, the controller 11 may determine that the vehicle V has not entered the target area.

S102: The controller 11 acquires a remaining energy amount of the vehicle V.

For example, the controller 11 acquires a remaining energy amount of the vehicle V through the acquisition interface 16.

S103: The controller 11 determines whether the remaining energy amount is less than a predetermined criterion. When it is determined to be less than the predetermined criterion (S103-Yes), the process proceeds to S104. When it is determined to be equal to or more than the predetermined criterion (S103-No), the process ends.

The predetermined criterion may be a fixed value, or may be automatically determined by the controller 11. For example, when the user has set a destination point, the controller 11 may calculate the predetermined criterion based on the distance from the position of the target area that the vehicle V is determined to have entered to the destination point. For example, the longer the distance from the target area to the destination, the higher the controller 11 may set the predetermined criterion. At this time, the controller 11 may calculate the predetermined criterion in consideration of the vehicle type (fuel efficiency) or the like of the vehicle V. For example, the better the fuel efficiency of the vehicle V, the lower the controller 11 may set the predetermined criterion.

S104: When the vehicle V is determined to have entered the target area and the remaining energy amount is less than the predetermined criterion, the controller 11 outputs, in synthetic speech, a message regarding one or more energy supply facilities provided within the target area. The output of the message does not have to be in the form of synthetic speech. For example, the controller 11 may display the message in text format on a screen of the terminal apparatus 10.

For example, the controller 11 outputs, from the output interface 15, a message that guides the positions of the energy supply facilities within the target area in synthetic speech. In addition, the controller 11 may output information regarding the number, types, and the like of the energy supply facilities provided within the target area in synthetic speech.

As described above, the terminal apparatus 10 determines, based on position information on the vehicle V of the user, whether the vehicle V has entered a target area. The terminal apparatus 10 acquires a remaining energy amount of the vehicle V. When the vehicle V is determined to have entered the target area and the remaining energy amount is less than a predetermined criterion, the terminal apparatus 10 outputs a message regarding one or more energy supply facilities provided within the target area.

According to such a configuration, it is possible to convey information on energy supply facilities in a target area, to users who have a high necessity for supplying energy to vehicles V. For users who do not have a high necessity for supplying energy to vehicles V, synthetic speech is not output, thereby reducing annoyance. Therefore, technology for guiding information on energy supply facilities is improved in that users entering target areas can easily grasp information on energy supply facilities.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like contained in each component, each step, or the like can be rearranged without logical inconsistency, and a plurality of components, steps, or the like can be combined into one or a single component, step, or the like can be divided.

For example, in a variation of the embodiment described above, in S104, the controller 11 of the terminal apparatus 10 may determine the content of the message to be output in synthetic speech based on position information on the vehicle V at the time when the vehicle V is determined to have entered the target area. For example, there may be cases in which the output message is not appropriate as guidance, such as in a situation in which the vehicle V, at the time it is determined to have entered the target area, has already reached the vicinity of the energy supply facilities. By changing the content of the message output by the controller 11 according to the position of the vehicle V, it is possible to provide more appropriate guidance to the user regarding the positions of the energy supply facilities.

For example, in the above-described embodiment, the controller 11 of the terminal apparatus 10 may shorten the content of the message when the position of the vehicle V at the time when the vehicle V is determined to have entered the target area is within a second area beyond a checkpoint set on a travel route of the target area, as compared to when the position of the vehicle V is within a first area before the checkpoint. For example, in a case in which, at the time when the vehicle V is determined to have entered the target area, the vehicle V is traveling within the first area before the checkpoint set at a predetermined position (for example, on a deceleration lane to the target area or in a parking lot) within the target area, the controller 11 outputs all the content of the pre-set message. When the vehicle V is traveling within the second area beyond the checkpoint, the controller 11 outputs a shorter message than the pre-set message. Any method can be adopted to shorten the message to be output. For example, part of the message may be omitted or the reproduction speed of the message may be increased. Even when the vehicle V has significantly traveled along the travel route and the distances to the energy supply facilities are short, shortening the message to be output makes it possible to guide the user in grasping the positions of the energy supply facilities with more time to spare.

For example, when outputting the message in S104, the controller 11 of the terminal apparatus 10 may display the positions of the energy supply facilities on a map screen of the terminal apparatus 10. The controller 11 may automatically adjust the scale of the map screen according to the positions of the energy supply facilities and the position of the vehicle V. For example, the controller 11 may automatically adjust the scale so that both the position of the vehicle V and the positions of the energy supply facilities are displayed on the screen. This allows the user to confirm the positions of the energy supply facilities at a glance. In addition, the controller 11 may automatically adjust the scale of the map screen in consideration of the positions of other predetermined facilities.

For example, in the above-described embodiment, when two or more energy supply facilities are provided within the target area, the controller 11 of the terminal apparatus 10 may display a representative position of the two or more energy supply facilities (for example, the center position of the two or more energy supply facilities) on the map screen.

For example, in the above-described embodiment, the controller 21 of the server 20 may calculate the center position according to a change in the number and/or positions of the energy supply facilities. For example, when the energy supply facilities in the target area are expanded, the controller 21 calculates a new center position by analyzing video from a driving recorder capturing the energy supply facilities, satellite images, or the like. The controller 21 then stores the calculated center position in the memory 22, and transmits the center position to the terminal apparatus 10 via the network 30. The controller 11 of the terminal apparatus 10 displays the new center position on the map screen. This allows the user to be guided to the latest position of the energy supply facilities.

For example, an embodiment in which some of the processing executed by the terminal apparatus 10 in the above-described embodiment is executed by the server 20 is also possible.

In the above case, the controller 21 of the server 20 determines, based on position information of the vehicle V of the user, whether the vehicle V has entered a target area. The controller 21 acquires a remaining energy amount of the vehicle V. When the vehicle V is determined to have entered the target area and the remaining energy amount is less than a predetermined criterion, the controller 21 transmits, to the terminal apparatus 10 of the user, a message regarding one or more energy supply facilities provided within the target area.

For example, an embodiment in which a general purpose computer functions as the terminal apparatus 10 according to the above-described embodiment can also be implemented. Specifically, a program in which processes for realizing the functions of the terminal apparatus 10 according to the above-described embodiment is written may be stored in a memory of a general purpose computer, and the program may be read and executed by a processor. Accordingly, the present disclosure can also be implemented as a program executable by a processor, or a non-transitory computer readable medium storing the program.

Examples of some embodiments of the present disclosure are described below. However, it should be noted that the embodiments of the present disclosure are not limited to these examples.
[Appendix 1] A method executed by a terminal apparatus of a user, the method comprising:
   determining, based on position information on a vehicle of the user, whether the vehicle has entered a target area;
   acquiring a remaining energy amount of the vehicle; and
   outputting a message regarding one or more energy supply facilities provided within the target area when the vehicle is determined to have entered the target area and the remaining energy amount is less than a predetermined criterion.
[Appendix 2] The method according to appendix 1, wherein the terminal apparatus is configured to determine content of the message to be output in synthetic speech, based on position information on the vehicle at time when the vehicle is determined to have entered the target area, and output the message in synthetic speech.
[Appendix 3] The method according to appendix 2, wherein the terminal apparatus is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.
[Appendix 4] The method according to any one of appendices 1 to 3, further comprising:
   displaying positions of the energy supply facilities on a map screen of the terminal apparatus; and
   automatically adjusting a scale of the map screen according to the positions of the energy supply facilities and a position of the vehicle. [Appendix 5] The method according to any one of appendices 1 to 4, wherein when two or more energy supply facilities are provided within the target area, the terminal apparatus is configured to display a center position of the two or more energy supply facilities on a map screen.
[Appendix 6] The method according to any one of appendices 1 to 5, wherein when the user has set a destination point, the terminal apparatus is configured to calculate the predetermined criterion based on a distance from a position of the target area to the destination point.
[Appendix 7] A method executed by a server, the method comprising:
   determining, based on position information on a vehicle of a user, whether the vehicle has entered a target area;
   acquiring a remaining energy amount of the vehicle; and
   transmitting, to a terminal apparatus of the user, a message regarding one or more energy supply facilities provided within the target area when the vehicle is determined to have entered the target area and the remaining energy amount is less than a predetermined criterion.
[Appendix 8] The method according to appendix 7, wherein the server is configured to determine content of the message to be output in synthetic speech, based on position information on the vehicle at time when the vehicle is determined to have entered the target area.
[Appendix 9] The method according to appendix 8, wherein the server is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.
[Appendix 10] The method according to any one of appendices 7 to 9, further comprising causing the terminal apparatus to:
   display positions of the energy supply facilities on a map screen of the terminal apparatus; and
   automatically adjust a scale of the map screen according to the positions of the energy supply facilities and a position of the vehicle.
[Appendix 11] The method according to any one of appendices 7 to 10, wherein when two or more energy supply facilities are provided within the target area, the server is configured to cause the terminal apparatus to display a center position of the two or more energy supply facilities on a map screen.
[Appendix 12] The method according to appendix 11, wherein the server is configured to calculate the center position according to a change in number and/or position of the energy supply facilities.
[Appendix 13] The method according to any one of appendices 7 to 12, wherein when the user has set a destination point, the server is configured to calculate the predetermined criterion based on a distance from a position of the target area to the destination point.
[Appendix 14] A system comprising:
   a terminal apparatus; and
   a server configured to be communicable with the terminal apparatus,
   wherein
   the terminal apparatus or the server is configured to:
      determine, based on position information on a vehicle of a user, whether the vehicle has entered a target area; and
      acquire a remaining energy amount of the vehicle, and
   the terminal apparatus is configured to output a message regarding one or more energy supply facilities provided within the target area when the vehicle is determined to have entered the target area and the remaining energy amount is less than a predetermined criterion.
[Appendix 15] The system according to appendix 14, wherein
   the terminal apparatus or the server is configured to determine content of the message to be output in synthetic speech, based on position information on the vehicle at time when the vehicle is determined to have entered the target area, and
   the terminal apparatus is configured to output the message in synthetic speech.
[Appendix 16] The system according to appendix 15, wherein the terminal apparatus or the server is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.
[Appendix 17] The system according to any one of appendices 14 to 16, wherein the terminal apparatus is configured to:
   display positions of the energy supply facilities on a map screen of the terminal apparatus; and
   automatically adjust a scale of the map screen according to the positions of the energy supply facilities and a position of the vehicle.
[Appendix 18] The system according to any one of appendices 14 to 17, wherein the terminal apparatus is configured to, when two or more energy supply facilities are provided within the target area, display a center position of the two or more energy supply facilities on a map screen.
[Appendix 19] The system according to appendix 18, wherein the server is configured to calculate the center position according to a change in number and/or position of the energy supply facilities.
[Appendix 20] The system according to any one of appendices 14 to 19, wherein the terminal apparatus or the server is configured to, when the user has set a destination point, the terminal apparatus is configured to calculate the predetermined criterion based on a distance from a position of the target area to the destination point.

### REFERENCE SIGNS LIST

- 1: system
- 10: terminal apparatus
- 11: controller
- 12: memory
- 13: communication interface
- 14: input interface
- 15: output interface
- 16: acquisition interface
- 20: server
- 21: controller
- 22: memory
- 23: communication interface
- 30: network

## Claims

1. A method executed by a terminal apparatus of a user, the method comprising:
determining, based on position information on a vehicle of the user, whether the vehicle has entered a target area;
acquiring a remaining energy amount of the vehicle; and
outputting a message regarding one or more energy supply facilities provided within the target area when the vehicle is determined to have entered the target area and the remaining energy amount is less than a predetermined criterion.

2. The method according to claim 1, wherein the terminal apparatus is configured to determine content of the message to be output in synthetic speech, based on position information on the vehicle at time when the vehicle is determined to have entered the target area, and output the message in synthetic speech.

3. The method according to claim 2, wherein the terminal apparatus is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.

4. The method according to claim 1, further comprising:
displaying positions of the energy supply facilities on a map screen of the terminal apparatus; and
automatically adjusting a scale of the map screen according to the positions of the energy supply facilities and a position of the vehicle.

5. The method according to claim 1, wherein when two or more energy supply facilities are provided within the target area, the terminal apparatus is configured to display a center position of the two or more energy supply facilities on a map screen.

6. The method according to claim 1, wherein when the user has set a destination point, the terminal apparatus is configured to calculate the predetermined criterion based on a distance from a position of the target area to the destination point.

7. A method executed by a server, the method comprising:
determining, based on position information on a vehicle of a user, whether the vehicle has entered a target area;
acquiring a remaining energy amount of the vehicle; and
transmitting, to a terminal apparatus of the user, a message regarding one or more energy supply facilities provided within the target area when the vehicle is determined to have entered the target area and the remaining energy amount is less than a predetermined criterion.

8. The method according to claim 7, wherein the server is configured to determine content of the message to be output in synthetic speech, based on position information on the vehicle at time when the vehicle is determined to have entered the target area.

9. The method according to claim 8, wherein the server is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.

10. The method according to claim 7, further comprising causing the terminal apparatus to:
display positions of the energy supply facilities on a map screen of the terminal apparatus; and
automatically adjust a scale of the map screen according to the positions of the energy supply facilities and a position of the vehicle.

11. The method according to claim 7, wherein when two or more energy supply facilities are provided within the target area, the server is configured to cause the terminal apparatus to display a center position of the two or more energy supply facilities on a map screen.

12. The method according to claim 11, wherein the server is configured to calculate the center position according to a change in number and/or position of the energy supply facilities.

13. The method according to claim 7, wherein when the user has set a destination point, the server is configured to calculate the predetermined criterion based on a distance from a position of the target area to the destination point.

14. A system comprising:
a terminal apparatus; and
a server configured to be communicable with the terminal apparatus,
wherein
the terminal apparatus or the server is configured to:
determine, based on position information on a vehicle of a user, whether the vehicle has entered a target area; and
acquire a remaining energy amount of the vehicle, and
the terminal apparatus is configured to output a message regarding one or more energy supply facilities provided within the target area when the vehicle is determined to have entered the target area and the remaining energy amount is less than a predetermined criterion.

15. The system according to claim 14, wherein
the terminal apparatus or the server is configured to determine content of the message to be output in synthetic speech, based on position information on the vehicle at time when the vehicle is determined to have entered the target area, and
the terminal apparatus is configured to output the message in synthetic speech.

16. The system according to claim 15, wherein the terminal apparatus or the server is configured to shorten the content of the message when a position of the vehicle at the time when the vehicle is determined to have entered the target area is within a second area beyond a checkpoint set on a travel route of the target area, as compared to when the position of the vehicle is within a first area before the checkpoint.

17. The system according to claim 14, wherein the terminal apparatus is configured to:
display positions of the energy supply facilities on a map screen of the terminal apparatus; and
automatically adjust a scale of the map screen according to the positions of the energy supply facilities and a position of the vehicle.

18. The system according to claim 14, wherein the terminal apparatus is configured to, when two or more energy supply facilities are provided within the target area, display a center position of the two or more energy supply facilities on a map screen.

19. The system according to claim 18, wherein the server is configured to calculate the center position according to a change in number and/or position of the energy supply facilities.

20. The system according to claim 14, wherein the terminal apparatus or the server is configured to, when the user has set a destination point, the terminal apparatus is configured to calculate the predetermined criterion based on a distance from a position of the target area to the destination point.
